# EUROPÄISCHE PATENTSCHRIFT

(11) **EP 3 371 540 B1**
(45) Veröffentlichungstag und Bekanntmachung des Hinweises auf die Patenterteilung: **04.12.2019**
(21) Anmeldenummer: 16787893.3
(22) Anmeldetag: 28.10.2016
(51) Int. Cl.: F28F 9/007, F01M 5/00, F28F 9/02, F28D 9/00

(54) **WÄRMEÜBERTRAGERMODUL**
HEAT EXCHANGER MODULE
MODULE ÉCHANGEUR THERMIQUE

(30) Priorität: 03.11.2015 DE 102015221528
(43) Veröffentlichungstag der Anmeldung: 12.09.2018
(73) Patentinhaber: Mahle International GmbH, 70376 Stuttgart (DE)
(72) Erfinder: COBAN, Adem, 5302 Henndorf a. W. (AT); DESCHAMPS, Gregory, 78180 Montigny-le-btx (FR); SCHMIEDL, Kai-Torsten, 71155 Altdorf (DE); TARIM, Abdul-Kadir, 5230 Mattighofen (AT)
(74) Vertreter: BRP Renaud & Partner mbB Rechtsanwälte Patentanwälte Steuerberater
(86) Internationale Anmeldenummer: PCT/EP2016/076069
(87) Internationale Veröffentlichungsnummer: WO 2017/076766

(56) Entgegenhaltungen:
- EP-A1- 1 782 876
- DE-A1- 19 654 362
- GB-A- 2 112 918
- US-A1- 2010 000 708

## Beschreibung

Die vorliegende Erfindung betrifft ein Wärmeübertragermodul mit einer Wärmeübertragereinrichtung zum Temperieren eines Fluids mittels eines Wärmeübertragermediums, gemäß dem Oberbegriff des Anspruchs 1. Die Erfindung betrifft außerdem eine Brennkraftmaschine mit zumindest einem solchen Wärmeübertragermodul.

Aus der EP 1 559 980 B1 ist ein gattungsgemäßes Wärmeübertragermodul mit einem als Getriebeölkühler ausgebildeten Plattenwärmeübertrager bekannt, in dem das Getriebeöl mit einer Flüssigkeit im Wärmetausch steht. Darüber hinaus vorgesehen ist wenigstens eine Grundplatte mit einem Überführungskanal und einem Überleitungskanal, wobei am Überführungskanal der Grundplatte ein Thermostat-Regelventil in einem Gehäuse angeordnet ist, dessen Thermostat mit dem einen Medium, vorzugsweise Öl, über einen Ausschnitt im Überführungskanal in Kontakt kommt.

Aus der DE 198 28 029 A1 ist ein Wärmeübertrager mit parallel zueinander ausgerichteten Flachrohren mit dazwischen angeordneten spaltartigen Hohlräumen bekannt, in denen Turbulenzeinlagen üblicher Art angeordnet sind.

Aus der AT 506 972 A1 ist eine Plattenwärmeübertrager mit einer Vielzahl von übereinander gestapelten, parallelen und wannenartig ausgebildeten Platten bekannt, die Durchflussräume für zumindest zwei Medien aufspannen. Ebenfalls vorgesehen ist ein Anschlusselement zur Aufnahme zumindest eines Stutzens im Bereich einer vorzugsweise wannenartig ausgebildeten Endplatte, wobei der Stutzen an einem in Bezug auf die Platten hervorkragenden Abschnitt des Anschlusselements angeordnet ist. Bekannte Wärmeübertragermodule, welche beispielsweise als Ölkühler ausgebildet sind, sind üblicherweise in einen Ölkreislauf eingebunden, in welchem normalerweise auch eine Filtereinrichtung integriert ist. Oftmals werden dabei sogar sogenannte kombinierte Kühlmodule eingesetzt, welche zusätzlich zur Kühleinrichtung auch eine Filtereinrichtung aufweisen. Eine Ver- und Entsorgung der Kühleinrichtung mittels zu kühlendem Fluid und Kühlmittel erfolgt dabei in bekannter Weise über die Grundplatte, während eine Zu- und Ablaufleitung der Filtereinrichtung als separate Leitungen verlegt wurden, was jedoch vergleichsweise aufwendig und teuer ist.

Die vorliegende Erfindung beschäftigt sich daher mit dem Problem, für ein Wärmeübertragermodul der gattungsgemäßen Art eine verbesserte oder zumindest eine alternative Ausführungsform anzugeben, die insbesondere kostengünstig ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an einer Grundplatte einer Wärmeübertragereinrichtung zum Temperieren eines Fluids mittels eines Wärmeübertragermediums zusätzlich zumindest ein weiteres Zusatzaggregat anzuordnen und das zumindest eine Zusatzaggregat über die Grundplatte zu ver- und entsorgen, wodurch insbesondere separate Ver- und Entsorgungsleitungen, wie Zu- und Ablaufleitungen, welche bislang stets separat und damit aufwändig und teuer verlegt werden mussten, entfallen können. Dabei wird die Wärmeübertragereinrichtung des Wärmeübertragermoduls über die Grundplatte ver- und entsorgt. Das erfindungsgemäße Wärmeübertragermodul weist dabei die genannte Wärmeübertragereinrichtung zum Temperieren eines Fluides, beispielsweise eines Öls, mittels eines Wärmeübertragermediums auf, wobei nicht nur die Wärmeübertragereinrichtung an der Grundplatte angeordnet ist, sondern erfindungsgemäß zusätzlich noch zumindest ein Zusatzaggregat. In der Grundplatte selbst sind nun erfindungsgemäß zumindest eine Zulaufleitung und/oder eine Ablaufleitung des zumindest einen Zusatzaggregats angeordnet. Dies bedeutet, dass zumindest das eine Zusatzaggregat mit dem jeweiligen Medium vollständig über die Grundplatte ver- und entsorgt werden kann, wodurch insbesondere eine bislang erforderliche und separate Leitungsführung für das Zusatzaggregat entfallen kann. Zugleich in der Grundplatte angeordnet sind erfindungsgemäß zumindest folgende Kanäle: Ein Zulauf und/oder ein Ablauf für das zu temperierende Fluid und ein Zulauf und/oder ein Ablauf für das Wärmeübertragermedium, beispielsweise Kühlmittel, wobei die Zulaufleitung und die Ablaufleitung des zumindest einen Zusatzaggregats in der Grundplatte fluidisch getrennt vom Zulauf und vom Ablauf der Wärmeübertragereinrichtung sind. Dies bedeutet, dass sowohl die Wärmeübertragereinrichtung als auch das zumindest eine Zusatzaggregat mit den jeweiligen Medien zumindest teilweise, vorzugsweise vollständig, über die Grundplatte ver- und entsorgt werden können, und zwar unabhängig vom geführten Fluid, wodurch insbesondere eine bislang erforderliche und separate Leitungsführung für das Zusatzaggregat, welches beispielsweise als Ölpumpe oder als Filtereinrichtung ausgebildet sein kann, entfallen können. Das erfindungsgemäße Wärmeübertragermodul bietet dabei jedoch nicht nur den großen Vorteil kostengünstiger hergestellt werden zu können, sondern es stellt zugleich auch eine bauraumminimierende Ausführungsform dar, wodurch ein besonders kompakt bauendes Wärmeübertragermodul mit Zusatzaggregat geschaffen werden kann, was insbesondere unter dem Gesichtspunkt der beengten Bauraumverhältnisse in modernen Motorräumen von großem Vorteil ist.

Bei einer vorteilhaften Weiterbildung der erfindungsgemäßen Lösung ist die Wärmeübertragereinrichtung als Plattenwärmeübertrager, insbesondere als Ölkühler, ausgebildet. Ein derartiger Plattenwärmeübertrager besitzt mehrere übereinander gestapelte Wärmeübertragerplatten, die abwechselnd ein Kanalsystem für das Wärmeübertragermedium und das zu temperierende Fluid, beispielsweise Öl, bilden. Mit einer außenliegenden Platte, beispielsweise einer Deckplatte, sind sie an die Grundplatte angebunden, beispielsweise mit dieser verlötet. Derartige Plattenwärmeübertrager werden insbesondere zur Ölkühlung in modernen Kraftfahrzeugen mannigfaltig eingesetzt. Aufgrund ihrer hohen Leistung, bedingt durch die große Wärmeübertragerfläche sind selbst vergleichsweise kompakt bauende Plattenwärmeübertrager in der Lage Fluid effektiv kühlen zu können.

Bei einer weiteren vorteilhaften Ausführungsform der erfindungsgemäßen Lösung ist das Zusatzaggregat als Pumpe oder als Adapterstutzen, welcher mit einer Pumpe oder einem anderen Zusatzaggregat in Verbindung stehen kann, ausgebildet. Eine derartige Pumpe/Adapterstutzen, welche(r) beispielsweise als Ölpumpe oder als Kühlmittelpumpe ausgebildet ist, wurde bislang separat angeordnet und bedurfte deshalb bislang auch separater Ver- und Entsorgungsleitungen sowie jeweils hierfür ausgelegter Anschlüsse. Durch die Integration der Zu- und Ablaufleitung der Pumpe in die Grundplatte/Adapterstutzen kann nicht nur eine bauraumoptimierte Lösung geschaffen werden, sondern es ist zudem möglich, das bislang externe und damit aufwändige und teure Verlegen von Leitungen zu vermeiden.

Bei einer vorteilhaften Weiterbildung der erfindungsgemäßen Lösung ist in die Grundplatte ein erster Wandbereich, insbesondere in der Art einer Rinne, der Zulaufleitung und/oder der Ablaufleitung des zumindest einen Zusatzaggregats integriert, wobei ein die Zulaufleitung und/oder die Ablaufleitung vervollständigender zweiter Wandbereich durch die Wärmeübertragereinrichtung, insbesondere eine Wärmeübertragerplatte derselben, gebildet ist. In der Grundplatte können somit nicht nur die Zu- und Ablaufleitung des zumindest einen Zusatzaggregats vorgesehen sein, sondern zugleich auch Zu- und Ablauföffnungen für das zu temperierende Fluid und das Wärmeübertragermedium der Wärmeübertragereinrichtung, wobei für dieses rinnenartige Vertiefungen in der Grundplatte vorgesehen werden können, die zusammen mit der benachbarten Wärmeübertragerplatte der Wärmeübertragereinrichtung den Querschnitt der Zu- bzw. Ablaufleitung bilden. Hierdurch kann auch eine parallel zur Ebene der Grundplatte und zugleich in dieser verlaufende Zu- oder Ablaufleitung realisiert werden.

Bei einer vorteilhaften Weiterbildung der erfindungsgemäßen Lösung sind die Wärmeübertragereinrichtung das zumindest eine Zusatzaggregat auf gegenüberliegen Seiten der Grundplatte angeordnet. Alternativ ist selbstverständlich auch denkbar, dass sowohl die Wärmeübertragereinrichtung als auch das zumindest eine Zusatzaggregat auf derselben Seite der Grundplatte angeordnet sind, je nachdem, welche Bauraumerfordernisse seitens des Wärmeübertragermoduls erfüllt werden müssen. Unabhängig von der Anordnung des zumindest einen Zusatzaggregats ist es mittels der erfindungsgemäßen Grundplatte möglich, ein flexibles und zugleich kompakt bauendes Wärmeübertragermodul mit Zusatzaggregat zu realisieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine teilweise transparente Ansicht auf ein erfindungsgemäßes Wärmeübertragermodul mit Wärmeübertragereinrichtung,
- Fig. 2: eine weitere mögliche Ausführungsform des erfindungsgemäßen Wärmeübertragermoduls mit Wärmeübertragereinrichtung, Filtereinrichtung und Pumpe/Adapterstutzen mit zusätzlich eingezeichnetem Wärmeübertragermediumstrom,
- Fig. 3: eine Darstellung wie in Fig. 2, jedoch mit eingezeichnetem Fluidstrom,
- Fig. 4: eine Schnittdarstellung durch das erfindungsgemäße Wärmeübertragermodul im Bereich Grundplatte und der daran angeschlossenen Pumpe/Adapterstutzen bzw. Wärmeübertragereinrichtung,
- Fig. 5: eine Schnittdarstellung durch das erfindungsgemäße Wärmeübertragermodul im Bereich der Grundplatte mit angeschlossener Wärmeübertragereinrichtung und Filtereinrichtung,
- Fig. 6a,b: unterschiedliche Möglichkeiten der Kanalbildung,
- Fig. 7: einen nicht erfindungsgemäßen Wärmeübertrager, bei welchem eine Zuführung/Abführung mit/von Kühlmedium und kühlendem Medium über eine Deckscheibe erfolgt,
- Fig. 8: eine Draufsicht auf den Wärmeübertrager gemäß der Fig. 7,
- Fig. 9: eine Schnittdarstellung entlang der Schnittebene A-A.

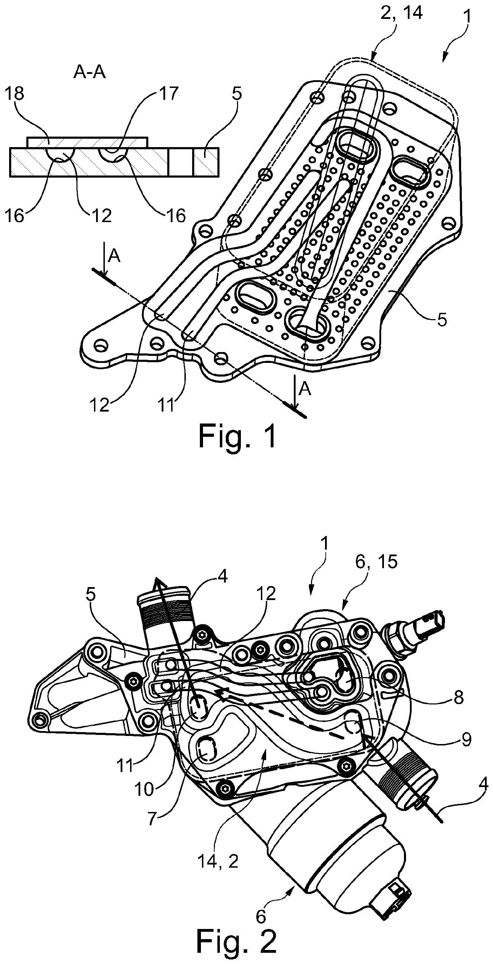

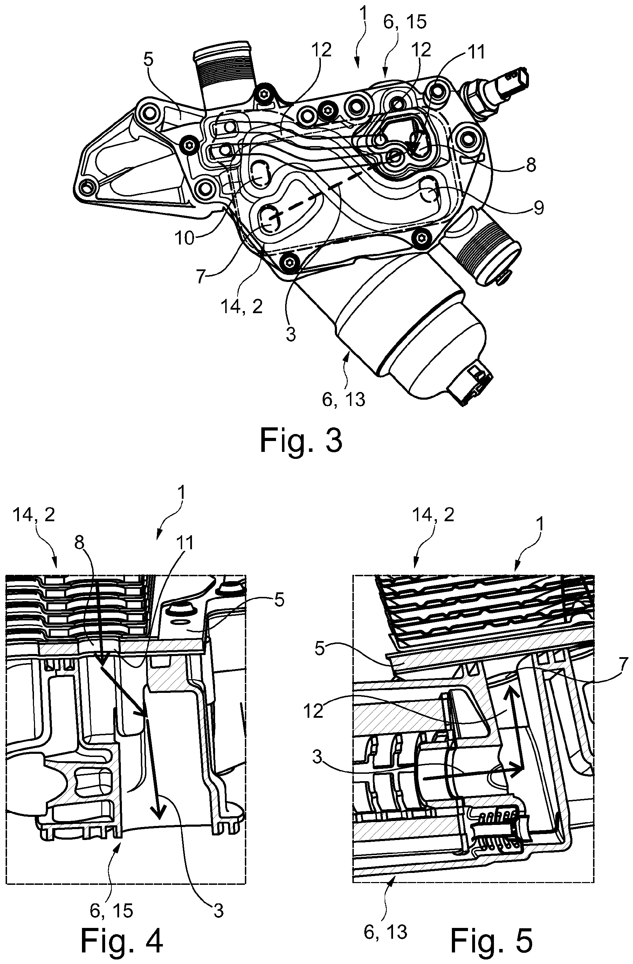

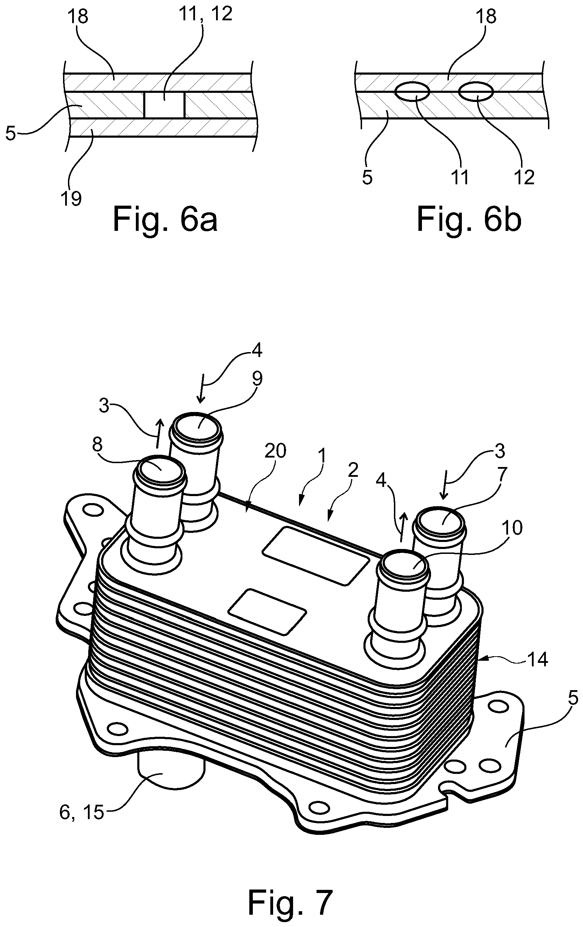

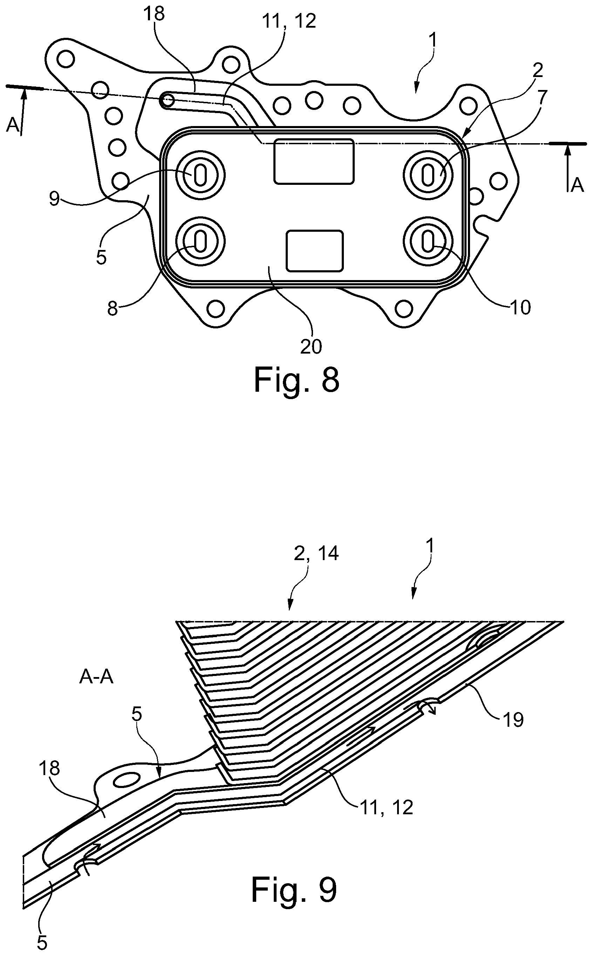

Entsprechend den Fig. 1 bis 5 und 7 bis 9 weist ein erfindungsgemäßes Wärmeübertragermodul 1 eine Wärmeübertragereinrichtung 2 zum Temperieren eines Fluides 3, beispielsweise Öl, mittels eines Wärmeübertragermediums 4, beispielsweise Kühlmittel, auf, wobei die Wärmeübertragereinrichtung 2 eine Grundplatte 5 besitzt. Erfindungsgemäß ist nun an dieser Grundplatte 5 zumindest ein Zusatzaggregat 6 angeordnet, wobei in der Grundplatte 5 zudem zumindest eine Zulaufleitung 11 und/oder eine Ablaufleitung 12 des zumindest einen Zusatzaggregats 6 vorgesehen sind/ist (vgl. Fig. 7 bis 9). Bei dem Wärmeübertrager 1 gemäß den Fig. 1 bis 5 sind zusätzlich noch ein Zulauf 7 und ein Ablauf 8 für das zu temperierende Fluid 3 sowie ein Zulauf 9 und ein Ablauf 10 für das Wärmeübertragermedium 4 in der Grundplatte 5 angeordnet, die in der Grundplatte 5 selbst fluidisch getrennt von der zumindest einen Zulaufleitung 11 und der zumindest einen Ablaufleitung 12 des zumindest einen Zusatzaggregats 6 ausgebildet sind.

Bei dem Wärmeübertrager 1 gemäß den Fig. 7 bis 9 sind der Zulauf 7 und der Ablauf 8 für das zu temperierende Fluid 3 sowie der Zulauf 9 und ein Ablauf 10 für das Wärmeübertragermedium 4 in einer Deckscheibe 20 angeordnet.

Das Zusatzaggregat 6 kann beispielsweise als Filtereinrichtung 13, insbesondere als Ölfilter, als Pumpe, als Halterung mit Kanalführung für das Zusatzaggregat (6), als Verteileinrichtung, als Ventileinrichtung oder als ein Kurbelgehäuse ausgebildet sein. Die Wärmeübertragereinrichtung 2 wiederum kann als Plattenwärmeübertrager 14, insbesondere als Ölkühler, ausgebildet sein. Zusätzlich oder alternativ kann ein Zusatzaggregat 6 auch als Pumpe 15 ausgebildet sein. Diese Pumpe 15 kann beispielsweise als Ölpumpe oder als Kühlmittelpumpe ausgebildet werden. Die Grundplatte 5 selbst ist dabei vorzugsweise als Druckgussbauteil oder als Stanzbauteil aus Metall ausgebildet, kann aber alternativ selbstverständlich auch als Kunststoffspritzgussteil ausgebildet sein.

Eine Realisierung der Zulaufleitung 11 und/oder der Ablaufleitung 12 wird durch einen gebauten Kanalquerschnitt realisiert, wobei in die Grundplatte 5 ein erster Wandbereich 16, insbesondere in der Art einer Rinne, der Zulaufleitung 11 und/oder der Ablaufleitung 12 des zumindest einen Zusatzaggregats 6 integriert ist, und wobei ein die Zulaufleitung 11 und/oder die Ablaufleitung 12 vervollständigender zweiter Wandbereich 17 (vgl. Fig. 1) durch die Wärmeübertragereinrichtung 2, insbesondere eine Wärmeübertragerplatte 18 der als Stapelscheibenkühler ausgebildeten Wärmeübertragereinrichtung 2 gebildet wird.

Betrachtet man insbesondere die Darstellung in Fig. 2 bis 5 und 7, so kann man erkennen, dass die Wärmeübertragereinrichtung 2 und das zumindest eine Zusatzaggregat 6 auf gegenüberliegenden Seiten der Grundplatte 5 angeordnet sind, wobei selbstverständlich alternativ oder zusätzlich auch die Anordnung zumindest eines Zusatzaggregats 6 auf derselben Seite der Grundplatte 5 wie die Wärmeübertragereinrichtung 2 möglich ist. Das zumindest ein Zusatzaggregat 6 besitzt dabei vorzugsweise ein Gehäuse aus Kunststoff.

Die Zulaufleitung 11 und die Ablaufleitung 12 in der Grundplatte 5 können dabei auf mehrere Arten gebildet werden, nämlich
- aus einem zweiteiligen Aufbau aus einer als Deckplatte ausgebildeten Wärmeübertragerplatte 18 (vgl. Fig. 1), oder
- aus einem dreiteiligen Aufbau mit unterer Abschlussplatte 19, Grundplatte 5 mit nach beiden Seiten hin offenen Kanälen und als Deckplatte ausgebildete Wärmeübertragerplatte 18 (vgl. Fig. 6b),
- aus der als Deckplatte ausgebildeten Wärmeübertragerplatte 18 mit integrierten Kanälen und als Abschluss das Zusatzaggregat 6 bzw. ein weiteres Bauteil (vgl. Fig. 6b).

Durch die Integration der Zulaufleitung 11 und der Ablaufleitung 12 des Zusatzaggregats 6 zumindest teilweise in die Grundplatte 5 der Wärmeübertragereinrichtung 2 bzw. des Wärmeübertragermoduls 1 können die bislang an dieser Stelle aufwändigen und teuren Leitungen kostengünstig und zudem platzoptimiert in die gesamte Wärmeübertragermoduleinheit integriert werden. Zudem entstehen auch größere konstruktive Freiheiten, um entsprechende Kanäle bzw. Anschlüsse vorzusehen. Eine weitere Kostenreduzierung ermöglicht sich durch simple Geometrie im Bereich der Filtereinrichtung 13, weniger komplexe Werkzeuge, bauraumfreundliche Auslegung des Wärmeübertragermoduls und insbesondere ein massiver Entfall von bislang erforderlichen Bauteilen, wie beispielsweise Dichtungen, Leitungen und Zwischenstücken.

## Patentansprüche

1. Wärmeübertragermodul (1) mit einer Wärmeübertragereinrichtung (2) zum Temperieren eines Fluids (3) mittels eines Wärmeübertragermediums (4), wobei die Wärmeübertragereinrichtung (2) an einer Grundplatte (5) angeordnet ist,
- wobei an der Grundplatte (5) zumindest ein Zusatzaggregat (6) angeordnet ist,
- wobei in der Grundplatte (5) zumindest folgende Kanäle vorgesehen sind,
- ein Zulauf (7) und ein Ablauf (8) für das zu temperierende Fluid (3), und
- ein Zulauf (9) und ein Ablauf (10) für das Wärmeübertragermedium (4),
**dadurch gekennzeichnet,**
- **dass** in der Grundplatte (5) zumindest eine Zulaufleitung (11) sowie eine Ablaufleitung (12) des zumindest einen Zusatzaggregats (6) angeordnet sind, die in der Grundplatte (5) fluidisch getrennt vom Zulauf (7,9) und vom Ablauf (8,10) sind,
- **dass** die Zulaufleitung (11) und die Ablaufleitung (12) des zumindest einen Zusatzaggregats (6) sowohl außerhalb als auch unterhalb der Wärmeübertragereinrichtung (2) angeordnet sind,
- das Zusatzaggregat (6) als Pumpe (15) oder als Filtereinrichtung (13), insbesondere als Ölfilter, ausgebildet ist.

2. Wärmeübertragermodul nach Anspruch 1,
**dadurch gekennzeichnet, dass**
in die Grundplatte (5) ein erster Wandbereich (16), insbesondere in der Art einer Rinne, der Zulaufleitung (11) und/oder der Ablaufleitung (12) des zumindest einen Zusatzaggregats (6) integriert ist, wobei ein die Zulaufleitung (11) und/oder die Ablaufleitung (12) vervollständigender zweiter Wandbereich (17) durch die Wärmeübertragereinrichtung (2), insbesondere eine Wärmeübertragerplatte (18) derselben, gebildet ist.

3. Wärmeübertragermodul nach Anspruch 1 oder 2,
**dadurch gekennzeichnet, dass**
die Pumpe (15) als Ölpumpe oder als Kühlmittelpumpe ausgebildet ist.

4. Wärmeübertragermodul nach einem der Ansprüche 1 bis 3,
**dadurch gekennzeichnet, dass**
die Grundplatte (5) als Druckgussbauteil oder als Stanzbauteil oder als Kunststoffspritzgussbauteil ausgebildet ist.

5. Wärmeübertragermodul nach einem der Ansprüche 1 bis 4,
**dadurch gekennzeichnet, dass**
die Wärmeübertragereinrichtung (2) als Plattenwärmeübertrager (14), insbesondere als Ölkühler, ausgebildet ist.

6. Wärmeübertragermodul nach einem der Ansprüche 1 bis 5,
**dadurch gekennzeichnet, dass**
die Wärmeübertragereinrichtung (2) und das zumindest eine Zusatzaggregat (6) auf gegenüberliegenden Seiten der Grundplatte (5) angeordnet sind.

7. Wärmeübertragermodul nach einem der Ansprüche 1 bis 6,
**dadurch gekennzeichnet, dass**
das zumindest eine Zusatzaggregat (6) ein Kunststoffgehäuse aufweist.

8. Brennkraftmaschine (19) mit zumindest einem Wärmeübertragermodul (1) nach einem der vorhergehenden Ansprüche.

## Claims

1. Heat transfer module (1) with a heat transfer device (2) for tempering a fluid (3) by means of a heat transfer medium (4), wherein the heat transfer device (2) is disposed on a base plate (5),
- wherein on the base plate (5) is disposed at least one additional unit (6),
- wherein in the base plate (5) are provided at least following channels,
- a feed (7) and a discharge (8) for the fluid (3) to be tempered, and
- a feed (9) and a discharge (10) for the heat transfer medium (4),
**characterised in**
- **that** in the base plate (5) are disposed at least one feed duct (11) and one discharge duct (12) of the at least one additional unit (6), which feed duct and discharge duct are in the base plate (5) fluidically separated from the feed (7, 9) and from the discharge (8, 10),
- **that** the feed duct (11) and the discharge duct (12) of the at least one additional unit (6) are disposed both externally to and below the heat transfer device (2),
- **that** the additional unit (6) is formed as a pump (15) or as a filter device (13), in particular as an oil filter.

2. Heat transfer module according to claim 1,
**characterised in that**
in the base plate (5) is integrated a first wall area (16), in particular in the manner of a groove, of the feed duct (11) and/or the discharge duct (12) of the at least one additional unit (6), wherein a second wall area (17) completing the feed duct (11) and/or the discharge duct (12) is formed by the heat transfer device (2), in particular a heat transfer plate (18).

3. Heat transfer module according to claim 1 or 2,
**characterised in that**
the pump (15) is in the form of an oil pump or a cooling agent pump.

4. Heat transfer module according to any of claims 1 to 3,
**characterised in that**
the base plate (5) is formed as a die-cast component or as a punch element or as a plastic injection moulded component.

5. Heat transfer module according to any of claims 1 to 4,
**characterised in that**
the heat transfer device (2) is in the form of a plate heat transfer (14), in particular an oil cooler.

6. Heat transfer module according to any of claims 1 to 5,
**characterised in that**
the heat transfer device (2) and the at least one additional unit (6) are disposed on opposite sides of the base plate (5).

7. Heat transfer module according to any of claims 1 to 6,
**characterised in that**
the at least one additional unit (6) has a plastic housing.

8. Internal combustion engine (19) having at least one heat transfer module (1) according to any of the preceding claims.

## Revendications

1. Module échangeur de chaleur (1) avec un dispositif échangeur de chaleur (2) pour la mise à température d'un fluide (3) au moyen d'un milieu échangeur de chaleur (4), dans lequel le dispositif échangeur de chaleur (2) est agencé au niveau d'une plaque de base (5),
- dans lequel au moins un groupe supplémentaire (6) est agencé au niveau de la plaque de base (5),
- dans lequel au moins des canaux suivants sont prévus dans la plaque de base (5),
- une amenée (7) et une évacuation (8) pour le fluide à mettre à température (3), et
- une amenée (9) et une évacuation (10) pour le milieu échangeur de chaleur (4),
**caractérisé en ce**
- **qu'**au moins une conduite d'amenée (11) ainsi qu'une conduite d'évacuation (12) de l'au moins un groupe supplémentaire (6) sont agencées dans la plaque de base (5), qui sont séparées fluidiquement de l'amenée (7, 9) et de l'évacuation (8, 10) dans la plaque de base (5),
- **que** la conduite d'amenée (11) et la conduite d'évacuation (12) de l'au moins un groupe supplémentaire (6) sont agencées aussi bien à l'extérieur qu'en dessous du dispositif échangeur de chaleur (2),
- **que** le groupe supplémentaire (6) est réalisé en tant que pompe (15) ou en tant que dispositif de filtre (13), en particulier en tant que filtre à huile.

2. Module échangeur de chaleur selon la revendication 1,
**caractérisé en ce que**
une première zone de paroi (16), en particulier à la manière d'une gouttière, de la conduite d'amenée (11) et/ou de la conduite d'évacuation (12) de l'au moins un groupe supplémentaire (6) est intégrée dans la plaque de base (5), dans lequel une deuxième zone de paroi (17) complétant la conduite d'amenée (11) et/ou la conduite d'évacuation (12) est formée par le dispositif échangeur de chaleur (2), en particulier une plaque échangeur de chaleur (18) de celui-ci.

3. Module échangeur de chaleur selon la revendication 1 ou 2,
**caractérisé en ce que**
la pompe (15) est réalisée en tant que pompe à huile ou en tant que pompe à réfrigérant.

4. Module échangeur de chaleur selon l'une quelconque des revendications 1 à 3,
**caractérisé en ce que**
la plaque de base (5) est réalisée en tant que pièce moulée sous pression ou en tant que pièce poinçonnée ou en tant que pièce moulée par injection de plastique.

5. Module échangeur de chaleur selon l'une quelconque des revendications 1 à 4,
**caractérisé en ce que**
le dispositif échangeur de chaleur (2) est réalisé en tant qu'échangeur de chaleur à plaques (14), en particulier en tant que refroidisseur d'huile.

6. Module échangeur de chaleur selon l'une quelconque des revendications 1 à 5,
**caractérisé en ce que**
le dispositif échangeur de chaleur (2) et l'au moins un groupe supplémentaire (6) sont agencés sur des côtés opposés de la plaque de base (5).

7. Module échangeur de chaleur selon l'une quelconque des revendications 1 à 6,
**caractérisé en ce que**
l'au moins un groupe supplémentaire (6) présente un boîtier en plastique.

8. Moteur à combustion interne (19) avec au moins un module échangeur de chaleur (1) selon l'une quelconque des revendications précédentes.
